# EUROPEAN PATENT APPLICATION

(11) **EP 2 907 659 A1**
(43) Date of publication of application: **19.08.2015**
(21) Application number: 13847200.6
(22) Date of filing: 11.10.2013
(51) Int. Cl.: B32B 27/18, C08J 7/04, C09D 5/24, C09D 7/12, C09D 201/02, C09K 3/16

(54) **ANTI-STATIC FILM**

(30) Priority: 15.10.2012 JP 2012227971; 05.06.2013 JP 2013118919
(71) Applicant: Unitika, Ltd., Amagasaki-shi, Hyogo 660-0824 (JP)
(72) Inventor: SAKAKURA Hiroshi, Kyoto 611-0021 (JP)
(74) Representative: Vigand, Philippe
(86) International application number: PCT/JP2013/077746
(87) International publication number: WO 2014/061581

(57) **Abstract**

Disclosed is an anti-static film including an anti-static layer on at least one surface of a resin film, wherein the anti-static layer includes an anti-static component-containing polymer (A), an alkylurea derivative (B) and a curing agent (C). The surface specific resistivity of the anti-static film at 23°C and 50% RH is 1.0 × 10¹¹ Ω/□ or less.

## Description

### Technical Field

The present invention relates to an anti-static film.

### Background Art

Polyester film is excellent in mechanical properties, heat resistance and transparency, and hence is widely used as the base material film and process film for, for example, packaging materials for packaging food and the like, data memory materials, building materials, electronic materials and printing materials.

However, in general, polyester film tends to cause static electricity due to the friction such as contact, and dust tends to attach to the polyester film, at the time of processing or using products made therefrom. Accordingly, in the application incompatible with dust such as cover tape for carrier tape, films subjected to anti-static treatment are used. Among others, films having a polymer-type anti-static layer, hardly undergoing anti-static agent transfer and being low in humidity dependence are widely used (for example, JP2006-160883A).

Recently, for example, in the application to a cover tape for a carrier tape, the acceleration of the filling-mounting process has been promoted, and accordingly, the films have been required to have heat resistance and impact resistance (tear resistance). In order to cope with this requirement, the following methods have been proposed: a method in which the thickness of the polyester film used as the base material is made thick; a method in which for example, a nylon film excellent in mechanical properties is laminated (for example, JP2004-231208A); and a method in which an impact resistance improver is added to the sealant layer (for example, JP2004-244115A). In order to cope with the foregoing acceleration and the stabilization of the sealing strength, the following methods have been proposed: a method in which a resin having a relatively low melting point is used for the sealant; and a method in which on the outermost layer side of the sealant, a sealing layer such as a hot melt layer is newly disposed (for example, JP2003-192022A and JP2004-123112A). However, the method of increasing the thickness leads to cost increase. The method using for the sealant layer an impact resistance improver or a low-melting point resin tends to cause the softening of the sealant layer to form tucks, and hence when the tape is stored in a form of a roll, unfortunately blocking occurs.

As a countermeasure against blocking, the following methods have been proposed: a method in which an additional attachment-preventing layer is provided on the surface opposite to the sealing layer; and a method in which fine particles are added to the sealant layer (for example, JP2006-168188A). However, the method in which an attachment-preventing layer is provided and the method in which fine particles are added to the sealant layer unfortunately still suffer from cost increase.

### Summary of Invention

### Technical Problem

An object of the present invention is to provide an anti-static film not adversely affecting the anti-static property in the case where an anti-static agent is used, and being designed so as for blocking to hardly occur.

### Solution to Problem

The present inventor has reached the present invention by discovering that the above-described is solved by providing an anti-static layer on at least one surface of a resin film by using a coating liquid including an anti-static agent, an alkylurea derivative and a curing agent.

Specifically, the gist of the present invention is as follows.

(1) An anti-static film including an anti-static layer on at least one surface of a resin film, wherein the anti-static layer includes an anti-static component-containing polymer (A), an alkylurea derivative (B) and a curing agent (C), and the surface specific resistivity of the anti-static film at 23°C and 50% RH is 1.0 × 10¹¹ Ω/□ or less.
(2) The anti-static film according to (1), wherein anti-static component-containing polymer (A) is constituted with a quaternary ammonium base-containing polymer (A1), and the content ratio (A1/B) between the quaternary ammonium base-containing polymer (A1) and the alkylurea derivative (B) is 30/70 to 95/5 (mass ratio).
(3) The anti-static film according to (2), wherein the quaternary ammonium base-containing polymer (A1) has one or more functional groups selected from the group consisting of a carboxyl group, a hydroxyl group and an amino group.
(4) The anti-static film according to any one of (1) to (3), wherein the curing agent (C) is one or more selected from the group consisting of an epoxy compound, an amino resin, an isocyanate compound, a silanol compound and a metal complex salt.
(5) A method for producing an anti-static film, including, when the anti-static film according to any one of (1) to (4) is produced, forming an anti-static layer by applying and drying a coating liquid including the anti-static component-containing polymer (A) or the quaternary ammonium base-containing polymer (A1), the alkylurea derivative (B) and the curing agent (C).
(6) The method for producing an anti-static film, according to (5), wherein the coating liquid further includes a dispersing antifoaming agent (D) and/or a modified silicone compound (E).
(7) The method for producing an anti-static film, according to (5) or (6), wherein the solvent of the coating liquid is water.

### Advantageous Effects of Invention

According to the present invention, it is possible to provide a film being a film excellent in anti-static property, and hardly undergoing the occurrence of blocking even at high temperatures. The film is free from the occurrence of blocking, even when the film is brought into contact with, in particular a layer having weak adhesiveness or heat sealing property in the materials such as packaging materials, data memory materials, building materials, printing materials and electronic materials. In the anti-static film of the present invention, the surface of the anti-static layer thereof maintains excellent adaptability to lamination even when the antistatic film is stored in a form of a roll. The anti-static film of the present invention can be suitably used as cover tapes for carrier tapes and the like.

### Description of Embodiments

The anti-static film of the present invention includes an anti-static layer formed on at least one surface of a resin film by applying and drying a specific coating liquid. As the resin film, polyester film and films using other resins are preferable.

Examples of the polyester resin used for the polyester film include polyethylene terephthalate, polyethylene-2,6-naphthalate, polybutylene terephthalate and polybutylene terephthalate isophthalate. Polyethylene terephthalate is more preferable from the viewpoint of the balance between the cost and the mechanical properties. The melting point of the polyester resin is preferably 246°C or higher; the melting point of the polyester resin falling within the foregoing range can lead to the suppression of the deformation (sealing failure due to elongation or widthwise shrinkage) in rapid and high-temperature sealing. The polyester film may also be a film the surface of which is subjected to an in-line or off-line treatment with corona discharge or ion blow, for the purpose of preventing cissing or the like and for the purpose of improving the adhesiveness with the anti-static layer.

The method for producing a polyester film is not particularly limited. For example, a simultaneous biaxial stretching method is quoted in which a polyester resin is melted and mixed in an extruder, the molten resin is extruded through a T-die and cooled rapidly to yield an unstretched film and the resulting unstretched film is preheated and then simultaneously longitudinally and transversely stretched. Alternatively, a successive biaxial stretching method is quoted in which an unstretched film obtained by extruding a molten resin through a T-die and by cooling the extruded resin is preheated, then stretched in the lengthwise direction by taking advantage of the speed difference between rolls, and subsequently gripped with clips and stretched in the widthwise direction. Above all, the successive stretching method is preferable because the stretching magnification can be easily varied. The stretching magnification is not particularly limited; however, from the viewpoint of the deformation at the time of sealing at a high speed and a high temperature, the magnification in the longitudinal direction, namely, the lengthwise direction is preferably 3 or more, and the magnification in the transverse direction, namely, the widthwise direction is preferably 3 or more. The area magnification is preferably 10 or more, more preferably 11 or more and furthermore preferably 12 or more. In order to remove strain, it is preferable to perform thermosetting and thermorelaxation after stretching. Additives such as an antioxidant and a lubricant may also be added to the polyester film, within a range not impairing the advantageous effects of the present invention.

The coating liquid used in the present invention includes an anti-static component-containing polymer (A), an alkylurea derivative (B) and a curing agent (C). As the anti-static component-containing polymer (A), a quaternary ammonium base-containing polymer (A1) is preferably used.

The quaternary ammonium base-containing polymer (A1) may be a polymer having electrostatic polarization relaxation property (ion conductive polymer). The quaternary ammonium base in the polymer (A1) may be located either in the main chain of the polymer or in the side chain of the polymer. The quaternary ammonium base can develop anti-static property. As the polymer (A1), for example, acrylic resin, urethane-based resin, polyvinyl-based resin and polyamine-based resin are preferable, and polyvinyl-based resin and polyamine-based resin are more preferable. The polymer (A1) preferably contains functional groups such as a hydroxyl group, a carboxyl group and an amino group, and in particular, preferably contains a hydroxyl group or an amino group, in order to suppress the decrease with time of the wetting tension of the surface of the anti-static layer, suppress the blocking, and improve the adhesiveness between the anti-static layer and the base material when the anti-static film of the present invention is stored in a form of a roll. When the polymer (A1) contains a carboxyl group, the association of the carboxyl group and the quaternary ammonium base sometimes increases in viscosity and leads to the gelation of the polymer (A1).

Examples of the quaternary ammonium base-containing monomer include a pyrrolidinium ring, a quaternized product of an alkylamine, products obtained by copolymerizing these compounds with acrylic acid or a methacrylic acid, a quaternized product of an N-alkylamino acrylamide, vinylbenzyl trimethylammonium salt, 2-hydroxy-3-methacryloxypropyl trimethylammonium salt and acryloyloxyethyl dimethylammonium methylsulfonate. These monomers may be used each alone or in combinations. Examples of the anion to be the counterion of the quaternary ammonium base include: ions of halogen, alkyl sulfate, alkyl sulfonate, nitric acid, sulfuric acid, phosphoric acid, acetic acid and sulfamic acid. Among these, the counterions other than the halogen counterions, and from the viewpoint of the heat resistance, the counterions derived from an alkyl sulfate or an alkyl sulfonate are preferable.

Examples of the hydroxyl group-containing monomer include: hydroxy vinyl ether, hydroxymethyl acrylate, 2-hydroxyethyl acrylate, 3-hydroxypropyl acrylate, 4-hydroxybutyl acrylate, 5-hydroxypentyl acrylate, 6-hydroxyhexyl acrylate, hydroxymethyl methacrylate, 2-hydroxyethyl methacrylate, 3-hydroxypropyl methacrylate, 4-hydroxybutyl methacrylate, 5-hydroxypentyl methacrylate, 6-hydroxyhexyl methacrylate, hydroxymethyl crotonate, 2-hydroxyethyl crotonate, 3-hydroxypropyl crotonate, 4-hydroxybutyl crotonate, 5-hydroxypentyl crotonate, 6-hydroxyhexyl crotonate, N-methylolacrylamide, allyl alcohol, allyl glycidyl ether, allyl-2,3-epoxybutyl ether, allyl-2,3-epoxy-2-methyl propyl ether, methallyl glycidyl ether, methallyl-2,3-epoxy butyl ether, methallyl-2,3-epoxy-2-methyl propyl ether, α-allyl-ω-hydroxy(polyoxyethylene), α-allyl-ω-hydroxy(polyoxypropylene), α-allyl-ω-hydroxy(oxyethylene oxypropylene), α-allyl-ω-hydroxy(polyoxyethylene oxypropylene), α-allyl-ω-hydroxy(polyoxyethylene polyoxypropylene), α-methallyl-ω-methallyl-hydroxy(polyoxyethylene), α-methallyl-ω-hydroxy (polyoxypropylene), α-methallyl-ω-hydroxy(oxyethylene oxypropylene), α-methallyl-ω-hydroxy(polyoxyethylene oxypropylene) and α-methallyl-ω-hydroxy(polyoxyethylene polyoxypropylene). Among these, N-methylol acrylamide, allyl alcohol and hydroxy vinyl ether are preferable. These monomers may be used each alone or in combinations.

Examples of the carboxyl group-containing monomer include: (meth)acrylic acid, itaconic acid, fumaric acid, maleic acid, acryloyloxyethyl succinic acid and phthalic acid.

These monomers may be used each alone or in combinations.

Examples of the amino group-containing monomer include: allylamines such as monoallylamine, N,N-dialkylallylamine, N-monoalkylallylamine and diallylamine, and the adduct salts of these; acrylamide; and reaction products between unsaturated carboxylic acids such as acrylic acid, methacrylic acid and maleic acid and aziridine compounds. These monomers may be used each alone or in combinations. Examples of the adducts salts of the allylamines include: hydrochloric acid salts, sulfuric acid salts, sulfurous acid salts, hydrobromic acid salts, phosphoric acid salts, acetic acid salts, methanesulfonic acid salts, trifluoroacetic acid salts and p-toluenesulfonic acid salts.

The polymer (A1) may be further copolymerized another monomer(s), if necessary. Examples of the another monomer(s) include: (meth)acrylic acid ester; (meth) acrylic acid amide; vinyl esters such as vinyl acetate and vinyl butyrate; unsaturated carboxylic acids such as maleic acid, fumaric acid and oleic acid, and the ester compounds of these acids; and unsaturated hydrocarbon compounds such as styrene, isoprene and butadiene.

In the anti-static film of the present invention, for the purpose of setting the surface specific resistivity at 23°C and 50% RH to be 1.0 × 10¹¹ Ω/□ or less, the proportion of the quaternary ammonium base-containing monomer in relation to the whole monomers is preferably 30 to 95 mol% and more preferably 50 to 90 mol%. The proportion of the quaternary ammonium base-containing monomer of 30 to 95 mol% in relation to the whole monomers in the polymer (A1) allows the anti-static property and the adhesiveness with the base material to be improved. The total proportion of the hydroxyl group-containing monomers or the total proportion of the amino group-containing monomers, in relation to the total amount of the whole monomers in the polymer (A1) is preferably 1 to 50 mol% and more preferably 10 to 30 mol%. The total proportion of the hydroxyl group-containing monomers or the total proportion of the amino group-containing monomers of 1 to 50 mol% in relation to the total amount of the whole monomers in the polymer (A1) increases the hardness of the coating film due to the reaction with the curing agent used in combination, and accordingly allows the antiblocking property to be improved without impairing the anti-static performance.

When the carboxyl group-containing monomer is used, the proportion thereof in relation to the whole monomers in the polymer (A1) is preferably 1 to 30 mol% and more preferably 5 to 15 mol%. The reaction of the carboxyl group-containing monomer with the curing agent (C) increases the hardness of the coating film and accordingly allows the antiblocking property to be improved.

Examples of the polymerization method of the polymers (A) and (A1) include solution polymerization, emulsion polymerization, radical polymerization, anion polymerization, cation polymerization and redox polymerization. Among these, the radical polymerization in an aqueous medium is more preferable.

The anti-static layer in the anti-static film of the present invention is required to contain the alkylurea derivative (B). The alkylurea derivative (B), as referred to herein, means a compound having an alkyl urea structure (R-NHCONH-, wherein R is an alkyl group). In the case where the alkylurea derivative (B) is not contained, when the anti-static film is stored in a form of a roll, the wetting tension of the surface of the anti-static layer is sometimes decreased with time, blocking sometimes occurs, or the adhesiveness of the anti-static layer with the resin film as the base material is sometimes degraded.

The alkylurea derivative (B) can be obtained by allowing a heretofore known isocyanate group-containing compound and a heretofore known amino group-containing compound to react with each other. Examples of the isocyanate group-containing compound include: octadecyl isocyanate, hexamethylene diisocyanate, isophorone diisocyanate, tolylene diisocyanate, metaxylylene diisocyanate, diphenylmethane diisocyanate, naphthylene diisocyanate and triphenylmethane triisocyanate. Examples of the amino group-containing compound include monoethanolamine, stearylamine, ethylenediamine, hexamethylenediamine, polyethylene imine, guanamine and benzoguanamine.

When a monoisocyanate compound or a monoamine compound is used, the number of the functional groups in the reaction partner with which the monoisocyanate or monoamine compound is allowed to react is not limited. However, when a compound containing two or more isocyanate groups, in particular three or more isocyanate groups is used, the reaction partner is preferably an amino compound containing two or less amino group in the molecule thereof. Similarly, when a compound containing two or more amino groups, in particular three or more amino groups is used, the reaction partner is preferably an isocyanate compound containing two or less isocyanate group in the molecule thereof. When the number of the amino groups and the number of the isocyanate groups are both three or more, the curing proceeds three-dimensionally so as to make it difficult to control the reaction, and consequently the obtained alkylurea derivative (B) is sometimes not dissolved in a solvent, or is sometimes hardly dispersed in water.

The alkylurea derivative (B) is preferably either a combination of a long chain alkyl group-containing isocyanate and an amine or a combination of an isocyanate and a long chain alkyl group-containing amine compound, from the viewpoint of the antiblocking property. Moreover, a compound containing at least one amino group in the molecule thereof, the amino group of monoethanolamine, diethanolamine, glycine, glutamic acid or the like and isocyanate are preliminarily allowed to react with each other, and then the remaining hydroxyl groups and carboxyl groups may be allowed to react with an epoxy compound, an oxazoline compound, a carbodiimide compound, a carboxylic acid, alcohols and an isocyanate compound to achieve a high molecular weight. Examples of such a compound include tetradecyl ethylene urea, heptadecyl ethylene urea, octadecyl ethylene urea and the derivatives of these. Among these, octadecyl ethylene urea derivatives are preferable from the viewpoint of the dispersibility and the antiblocking property.

The production method of the alkylurea derivative (B) is not particularly limited. Examples of the foregoing production method include a method in which an amino compound and an isocyanate compound dissolved or dispersed in water or organic solvents are mixed and stirred to yield an alkylurea derivative. In this case, a heretofore known nonionic, cationic or anionic surfactant, or an organic solvent may also be used. However, from the viewpoint of the VOC reduction, the amino compound and the isocyanate compound are preferably mixed and stirred in water. When organic solvents and a surfactant are used, the total amount of these is preferably less than 20 parts by mass, more preferably less than 10 parts by mass, furthermore preferably less than 5 parts by mass and particularly preferably less than 1 part by mass, in relation to 100 parts by mass of the total amount of the amino compound and the isocyanate compound. When an organic solvent is used, it is preferable to remove the organic solvent as completely as possible after the mixing and stirring by, for example, stripping.

Specific examples of the alkylurea derivative include: "Octex EM" manufactured by Hodogaya Chemical Co., Ltd., "Paragium RC" and "Paragium RS" manufactured by Ohara Paragium Chemical Co., Ltd. and "Geranex OM" manufactured by Matsumoto Yushi Co., Ltd.

The content ratio (mass ratio) A1/B between the quaternary ammonium base-containing polymer (A1) and the alkylurea derivative (B) is preferably 30/70 to 95/5, more preferably 40/60 to 90/10 and furthermore preferably 40/60 to 70/30. The content proportion of the polymer (A1) set to be 30 to 95% by mass in relation to the total amount of (A1) and (B) allows the anti-static film of the present invention to develop the required anti-static property such that the surface specific resistivity at 23°C and 50% RH is 1.0 × 10¹¹ Ω/□ or less, and allows the antiblocking property to be improved.

The anti-static layer in the anti-static film of the present invention is required to include the curing agent (C). Examples of the curing agent include an epoxy compound, an amino resin, an isocyanate compound and a silanol compound such as a silane coupling agent, a metal complex salt, polyethylene imine, polyvinyl alcohol and a methylol group-containing compound. Among these, an epoxy compound, an amino resin, an isocyanate compound, a silanol compound and a metal complex salt are preferable, and from the viewpoint of handleability, an amino resin is more preferable. When no curing agent is included, the adhesiveness with the base material may be insufficient, a phenomenon that the substances constituting the anti-static layer may adhere to the seal bar during heat sealing, the rubfastness may be insufficient to result in scraping of the anti-static layer, or exterior appearance failure or adhesion and short circuiting of electronic components may occur. When no curing agent is included, the anti-static layer is degraded in the adhesiveness with the resin film as the base material and is at the same time increased in the adhesive strength with the counterpart resin when laminated, and hence the antiblocking property gets worse as compared with the case where the curing agent is included.

Examples of the epoxy compound include: bifunctional derivatives such as diethylene glycol diglycidyl ether, glycerin diglycidyl ether and bisphenol A diglycidyl ether; trifunctional derivatives such as trimethylolpropane triglycidyl ether; epoxidized soybean oil; epoxidized castor oil; epoxidized polybutadiene; and a glycidyl (meth)acrylate-containing copolymer. The epoxy compound inevitably suffers from the residual chloride ion because of the use of epichlorohydrin as a starting material for the epoxy compound; thus, the epoxy compound is preferably a substance from which chloride ion is removed as completely as possible.

Examples of the amino resin include: melamine resins such as trimethylolmelamine, hexamethylolmelamine, trismethoxy methyl melamine and hexakismethoxy methyl melamine; glyoxal resin; and benzoguanamine resin.

Examples of the isocyanate compound include: aromatic polyisocyanates such as toluene diisocyanate and diphenylmethane diisocyanate; aliphatic polyisocyanates such as hexamethylene diisocyanate, cyclohexane diisocyanate and butane diisocyanate; and derivatives of these. Among these, a blocked isocyanate compound is preferable for the purpose of regulating the reactivity and enhancing the stability of the coating liquid.

Examples of the silanol compound include: epoxy alkyl silanes and amino alkyl silanes; and γ-glycidoxypropyltrimethoxysilane and γ-(2-aminoethyl)aminopropyltrimethoxysilane.

Examples of the metal complex salt include zirconium compounds and titanium compounds.

The content of the curing agent (C) preferably 5 to 43 parts by mass and more preferably 11 to 25 parts by mass, in relation to 100 parts by mass of the anti-static component-containing polymer (A). The content of (C) of 5 to 43 parts by mass can actually achieve the improvement of the adhesiveness with the base material and the improvement of the antiblocking property through the improvement of the hardness of the coating film.

To the curing agent, a catalyst may be added if necessary. Examples of the catalyst for the curing agent include: imidazole derivatives such as 2-methylimidazole and 2-ethyl-4-methylimidazole; epoxy ring-opening reaction catalysts such as polyamine and polyethylene imine derivatives; amino resin curing catalysts such as p-toluenesulfonic acid; and urethane curing catalysts such as imidazole and organotin compounds. The content of the catalyst for the curing agent is preferably 5 to 30% by mass and more preferably 5 to 15% by mass in relation to the total amount of the polymer (A), the curing agent (C) and the catalyst. The content of the catalyst for the curing agent set to be 5 to 30% by mass reduces the amount of the unreacted curing agent, and accordingly allows the antiblocking property through the improvement of the adhesiveness with the base material and the hardness of the coating film.

The anti-static film of the present invention can be produced by applying to a resin film such as a polyester film and drying a coating liquid including the anti-static component-containing polymer (A) such as the quaternary ammonium base-containing polymer (A1), the alkylurea derivative (B) and the curing agent (C).

In the present invention, a dispersing antifoaming agent (D) or a modified silicone compound (E) is preferably added to the coating liquid, in addition to the polymer (A), the alkylurea derivative (B) and the curing agent (C).

Examples of the dispersing antifoaming agent (D) include a nonionic surfactant. Among others, a polyoxyethylene alkyl ether-based compound, an acetylene glycol-based compound, and ethylene oxide adducts of these compounds are preferable, and an acetylene glycol-based compound and the ethylene oxide adduct of the acetylene glycol-based compound are preferable. Specific examples of the dispersing antifoaming agent (D) include 3,6-dimethyl-4-decine-3,6-diol, 2,4,7,9-tetramethyl-5-decine-4,7-diol, and the compounds obtained by adding ethylene oxide to these compounds. The addition amount of the dispersing antifoaming agent (D) is preferably 0.01 to 1 part by mass and more preferably 0.02 to 0.5 part by mass in relation to 100 parts by mass of the coating liquid not containing the dispersing antifoaming agent (D). The addition of the dispersing antifoaming agent (D) to the coating liquid can facilitate the uniform mixing of the high-polarity polymer (A), the highly hydrophobic alkylurea derivative (B) and the curing agent (C). The addition of the dispersing antifoaming agent (D) to the coating liquid can also suppress the foaming during coating, and hence can facilitate the uniform application of the coating liquid to the polyester film.

Examples of the modified silicone compound (E) include: compounds obtained by substituting, with the groups such as long-chain alkyl groups, hydroxyl groups, amine groups, epoxy groups, carboxyl groups or thiol groups, the side chains and terminals of organosiloxanes such as dimethylsiloxane or diphenylsiloxane; and organosiloxanes obtained by copolymerizing monomers or polymers having no silicon atoms. Examples of the monomer having no silicon atoms include (meth)acrylic monomers and vinyl monomers. Examples of the polymer having no silicon atoms include polyether. Among these, paintable type organosiloxanes in which the side chains and terminals are substituted with long chain alkyl groups, and organosiloxanes copolymerized with polyethers are preferable. The number of the terminal groups per one molecule is preferably 2 or more. In the case of an unmodified silicone compound other than the modified silicone compound (E), the compatibility in the anti-static layer is poor, and such an unmodified silicone compound tends to be segregated on the surface layer. Accordingly, the antiblocking property is improved, but the unmodified silicone compound tends to migrate to the opposite surface side, namely, the base material side during the storage of the film in a form of a roll. Consequently, the corona treatment degree of the base material may be degraded to disturb the adhesiveness of the anti-static layer with the base material, and may unstabilize the sealing strength after the processing into a carrier tape, as a final product form, obtained by slitting in a narrow width. The addition amount of the modified silicone compound (E) is preferably 1 to 20 parts by mass, more preferably 3 to 15 parts by mass and furthermore preferably 5 to 10 parts by mass, in relation to 100 parts by mass of the alkylurea derivative (B). The addition of the modified silicone compound (E) allows the coating film to be provided with further slippage and antiblocking property.

To the coating liquid, additives such as an antioxidant and a lubricant may be added within ranges not impairing the advantageous effects of the present invention.

The coating liquid is preferably water-soluble or is an aqueous dispersion, from the viewpoint of the work environment during production. The solid content concentration of the coating liquid is preferably 2 to 30% by mass; from the viewpoint of the coating workability, the solid content concentration of the coating liquid is more preferably 3 to 15% by mass.

Examples of the coating method of the coating liquid include: Meyer bar coating, air knife coating, reverse roll coating, reverse gravure roll coating, gravure roll coating, lip coating and die coating. The application amount of the coating liquid is preferably 1 to 10 g/m².

The coating liquid may be applied to a stretched film, or alternatively, the coating liquid may be applied after stretching in one axial direction and before stretching in the second axial direction, and subsequently the film may be stretched in the second axis direction. When the coating liquid is applied to the stretched film, the drying conditions are preferably such that the drying temperature is 50 to 90°C and the drying time is 10 to 60 seconds. When the coating liquid is applied after stretching in one axial direction and before stretching in the second axial direction, and subsequently the film is stretched, the stretching temperature of the film is 110 to 130°C, and the stretching magnification is preferably 3 to 4. When a heat treatment is performed after stretching, the heat treatment conditions are preferably such that the heat treatment temperature is 220 to 240°C and the heat treatment time is 5 to 15 seconds.

The thickness of the anti-static layer in the anti-static film of the present invention is preferably 0.02 to 0.5 µm. In this way, an anti-static film satisfactory in anti-static property and low in exterior appearance failure can be obtained.

The surface specific resistivity of the anti-static layer in the anti-static film of the present invention can be 1.0 × 10¹¹ Ω/□ or less at 23°C and 50% RH because the anti-static layer includes the anti-static component-containing polymer (A), the alkylurea derivative (B) and the curing agent (C).

As for the wetting tension of the anti-static layer of the anti-static film of the present invention, the surface on the opposite side to the anti-static layer can maintain the initial wetting tension even when the film is stored in a form of a roll because the anti-static layer includes the anti-static component-containing polymer (A), the alkylurea derivative (B) and the curing agent (C). In the present invention, when the film can maintain the wetting tension after standing still for 1 month at 40 mN/m or more on the basis of the evaluation method described below, it is possible to determine that the laminate properties of the surface on the opposite side to the anti-static layer are maintained.

The anti-static film of the present invention can be used as it is, but the surface of the anti-static layer or the uncoated surface of the resin film as the base material may be subjected to a surface treatment such as a corona discharge treatment or an ion blow treatment.

The anti-static film of the present invention is excellent in anti-static property, antiblocking property and the adhesiveness between the anti-static layer and the base material, and suppresses the degradation with time of the laminate properties of the surface on the opposite side to the anti-static layer in the anti-static film. Accordingly, the anti-static film of the present invention can be suitably used as cover tapes for carrier tapes and the like.

### Examples

Various evaluation methods in Examples and Comparative Examples presented below are as follows.

### 1. Analysis Methods

### (1) Surface Specific Resistivity

An anti-static polyester film as a sample film was regulated in moisture by being allowed to stand for 3 hours at a temperature of 23°C and a humidity of 50% RH, and then, the value after 10 seconds from the application of a voltage of 500 V was measured by using a high resistivity meter HT-260 manufactured by Dia Instruments Co., Ltd. The anti-static property of a sample film was evaluated on the basis of the surface specific resistivity of the surface of the anti-static layer thereof.

### (2) Wetting Tension

The wettability of the corona treated surface of a polyester film (PET-12 (12-µm-thick polyethylene terephthalate film, manufactured by Unitika Ltd.), hereinafter abbreviated as "PET film") was measured according to JIS K6768.

A sample film was wound around the outer circumference of a paper pipe of 10.5 cm in outer diameter in such a way that the anti-static layer faced the outside and the length of the wound film was 1 m. Around the outer circumference of the wound sample film, the PET film was further wound in a length of 2000 m under the conditions that the tension was 10 kg/m, the contact pressure was 10 kg/m and the winding speed of 100 m/min, in such a way that the corona treated surface of the PET film was brought into contact with anti-static layer of the sample film. The paper pipe with the films wound therearound was allowed to stand still at room temperature for 1 month, then the surface covering PET film was removed, and the wettability of the corona treated surface, which had been in contact with the antistatic layer, of the PET film was measured according to JIS K6768.

From the wetting tension difference between the PET film at the initial stage, namely, immediately before the winding and the PET film after the 1-month treatment, the laminate adaptability of the opposite surface to the anti-static layer of the sample film in the case where the PET film was stored in a form of a roll was evaluated.

### (3) Antiblocking Property

As the partner films used for the evaluation of the antiblocking property of a sample film, the following two partner films were prepared: a below-described "partner film 1" having a heat sealing layer exposed to the surface thereof, and a below-described "partner film 2" obtained by further laminating an acrylic anti-static agent layer on the heat sealing layer of the partner film 1 and by exposing the acrylic anti-static layer. Then, these partner films were each wound around the outer circumference of a paper pipe of 10.5 cm in outer diameter in such a way that the heat sealing layer or the acrylic anti-static agent layer faced the outside and the length of the wound film was 1 m. Around the outer circumference of each of the wound partner films, the sample film cut out to a 10 mm wide X 150 mm long rectangle was bonded in such a way that the lengthwise direction of the cut-out sample film was the circumferential direction, and the heat sealing layer or the acrylic anti-static agent layer of the partner film was brought into contact with the anti-static layer of the cut-out sample film. Around each of the bonded sample films, the PET film was further wound in a length of 2000 m under the conditions that the tension was 10 kg/m, the contact pressure was 10 kg/m and the winding speed of 100 m/min. The paper pipes each having three films wound therearound were each treated with a hot air dryer under the conditions of 60°C and 3 days (hot air drying treatment). Subsequently, from each of the paper pipes with three film wound therearound, the PET film as the outermost layer was removed, and then, the peel strength between anti-static film, which is the sample film, and the partner film was measured by using the "Autograph AGS-100B" manufactured by Shimadzu Corp. Each of the specimens used in the peel strength measurement was prepared and subjected to measurement as follows: in a state in which the heat sealing layer or the acrylic anti-static agent layer of the partner film and the anti-static layer of the sample film were superposed on each other, the laminate composed of the partner film and the sample film was cut to a width of 15 mm; then, the anti-static film as the sample film was fixed to the upper chuck and, at the same time, the partner film was fixed to the lower chuck; the peel strength was measured under the conditions that the blocking portion to be measured was bent toward the anti-static film side so as to form a peel angle of 180°, and the peel speed was set at 300 mm/min.

The antiblocking property was evaluated on the basis of the measured peel strength. The peel strength is preferably 0.5 N/m or less.

### (4) Adhesiveness

Sellotape (registered trademark) "LP-24" manufactured by Nichiban Co, Ltd. was bonded to the surface of the anti-static layer of a sample film, and then, the LP-24 tape was peeled off perpendicularly to the film surface. The case where the anti-static layer was free from any incomplete portion was evaluated as "good," and the case where the anti-static layer suffered from incomplete portion was evaluated as "poor."

### 2. Material <Partner Film for Evaluation of Antiblocking Property>

### (1) Partner Film 1

A two-layer film in which a heat sealing layer is laminated on a support layer was prepared. Specifically, the heat sealing layer was constituted with a resin mixture composed of 45 parts by mass of a styrenebutadiene copolymer ("Clearen" manufactured by Denki Kagaku Kogyo K.K., styrene/butadiene = 30/70 (mass ratio)), 45 parts by mass of a polyolefin resin ("Tafmer" manufactured by Mitsui Chemicals, Inc.) and 10 parts by mass of an impact resistant polyethylene ("HI-E6" manufactured by Toyo Styrene Co., Ltd.). The support layer was constituted with a resin mixture composed of 60 parts by mass of a polyolefin resin ("Tafmer" manufactured by Mitsui Chemicals, Inc.) and 40 parts by mass of a low density polyethylene ("UBE Polyethylene" manufactured by Ube Industries, Ltd.). By using these resin mixtures, with a T-die coextrusion method, a two-layer film, heat sealing layer/polyolefin resin support layer, was prepared wherein the heat sealing layer was 10 µm in thickness and the support layer was 20 µm in thickness, and the total thickness was 30 µm. In this case, the film extruded from the T-die was taken out by clamping with a silicone rubber mat roll (support layer side) and a metal cooling roll (heat sealing layer side) for which the average surface roughness was regulated to be 0.8 µm.

A coating liquid was obtained by mixing the urethane-based anchoring agents "EL530A" and "EL530B" manufactured by Toyo-Morton, Ltd., and by diluting the resulting mixture to a concentration of 5% by mass with ethyl acetate. To the corona treated surface of a 16-µm-thick biaxially stretched polyethylene terephthalate film "Emblet S-16" (base material layer) manufactured by Unitika Ltd., the coating liquid using the foregoing urethane-based anchoring agents was applied and dried so as for the coating amount after drying to be 0.3 g/m². The polyethylene terephthalate film to the surface of which the anchoring agents had been applied was used as the base film, and the foregoing two-layer film was extrusion-laminated, with the surface on the support layer side of the two-layer film as the lamination surface, on the anchoring agents of the base film, through the intermediary of the low density polyethylene melt extruded at approximately 300°C. In this way, the partner film 1 in which the heat sealing layer of the two-layer film was exposed to the outside was prepared.

### (2) Partner Film 2

On the heat sealing layer of the partner film 1, an acrylic anti-static agent "Bondip PA-100" manufactured by Konishi Co., Ltd. was applied so as for the dried film thickness to be 0.1 µm, and dried at 80°C for 60 seconds to prepare the partner film 2.

### <Quaternary Ammonium Base-Containing Polymer (A1)>

### • Polymer (A11)

Acryloyl aminoethyl dimethylammonium methylsulfonic acid salt/N-methylolacrylamide copolymer, average molecular weight: 40000, copolymerization ratio (molar ratio) between these two components: 90/10, the total amount of the hydroxyl group-containing monomers: 10 mol% in relation to the whole monomers in the polymer (A11)

### • Polymer (A12)

Polydiallyl dimethyl ammonium chloride, average molecular weight: 30000

### • Polymer (A13)

Acryloyl aminoethyl dimethylammonium methylsulfonic acid salt/allylamine hydrochloride/2-hydroxyethyl vinyl ether copolymer, average molecular weight: 30000, copolymerization ratio (molar ratio) between these three components: 80/5/15, the total amount of the hydroxyl group-containing monomers: 20 mol% in relation to the whole monomers in the polymer (A13)

### • Polymer (A14)

Acryloyl aminopropyl trimethylammonium thiocyanate/hydroxyethyl acrylamide copolymer, average molecular weight: 20000, copolymerization ratio (molar ratio) between these two components: 80/20, the total amount of the hydroxyl group-containing monomers: 20 mol% in relation to the whole monomers in the polymer (A14)

### • Polymer (A15)

Acryloyl aminoethyl dimethylammonium methylsulfonic acid salt/ethyl acrylate/N-methylol acrylamide copolymer, average molecular weight: 40000, copolymerization ratio (molar ratio) between these three components: 80/10/10, the total amount of the hydroxyl group-containing monomers: 10 mol% in relation to the whole monomers in the polymer (A15)

### • Polymer (A16)

Polyamide-polyamine-alkylene oxide adduct sulfate, average molecular weight: 20000

### • Polymer (A17)

Methyl methacrylate/ethyl acrylate/acrylic acid/quaternized product of dimethyl aminoethyl methacrylate methylsulfate copolymer, copolymerization ratio (molar ratio) between these four components: 45/5/5/45, the total amount of the carboxyl group-containing monomers: 5 mol% in relation to the whole monomers in the polymer (A17)

### • Polymer (A18)

Acryloyl aminoethyl dimethylammonium methylsulfonic acid salt polymer, average molecular weight: 30000

### • Polymer (A19)

Acryloyl aminoethyl dimethylammonium methylsulfonic acid salt/ethyl acrylate copolymer, average molecular weight: 20000, copolymerization ratio (molar ratio) between these two components: 80/20

### <Alkylurea Derivative (B)>

### • Alkylurea derivative (B1)

Octadecyl ethylene urea ("Octex EM" manufactured by Hodogaya Chemical Co., Ltd.)

### • Alkylurea derivative (B2)

Octadecyl ethylene urea ("Paragium RC" manufactured by Ohara Paragium Chemical Co., Ltd.)

### • Alkylurea derivative(B3)

Octadecyl ethylene urea ("Paragium RS" manufactured by Ohara Paragium Chemical Co., Ltd.)

### • Alkylurea derivative(B4)

Ethylene-based urea ("Geranex OM" manufactured by Matsumoto Yushi Co., Ltd.)

### <Other Additives>

### • Additive (B5)

Acrylic silicone emulsion ("Chaline R-170EM" manufactured by Nissin Chemical Industry Co., Ltd.)

### • Additive (B6)

Modified polyethylene emulsion ("Arrowbase CD-1200" manufactured by Unitika Ltd.)

### • Additive (B7)

Polyamide emulsion ("Resem O642" manufactured by Chukyo Yushi Co., Ltd.)

### <Curing Agent (C)>

### • Curing agent (C1)

Melamine resin ("Sumimal M-30WT" manufactured by Chang Chun Chemical Co., Ltd.)

### • Curing agent (C2)

Polyisocyanate compound ("Desmodule 100" manufactured by Sumitomo Bayer Urethane Co., Ltd.)

### • Curing agent (C3)

Epoxy group-containing silane coupling agent ("KBM-403" manufactured by Shin-Etsu Chemical Co., Ltd.)

### • Curing agent (C4)

Amino group-containing silane coupling agent ("KBE-703" manufactured by Shin-Etsu Chemical Co., Ltd.)

### • Curing agent (C5)

Zirconium tetraacetylacetonate ("ZC-150" manufactured by Matsumoto Fine Chemical Co., Ltd.)

### • Curing agent (C6)

Ammonium zirconium carbonate aqueous solution ("AC-7" manufactured by Daiichi Kigenso Kagaku Kogyo Co., Ltd.)

### • Curing agent (C7)

Titanium compound ("TC-315" manufactured by Matsumoto Fine Chemical Co., Ltd.)

### <Dispersing Antifoaming Agent (D)>

### • Dispersing antifoaming agent (D1)

Acetylene glycol-based dispersing antifoaming agent ("Olfine E1004" manufactured by Nissin Chemical Industry Co., Ltd.)

### • Dispersing antifoaming agent (D2)

Silica and mineral oil-containing acetylene glycol-based dispersing antifoaming agent ("Olfine AF103" manufactured by Nissin Chemical Industry Co., Ltd.)

### <Modified Silicone Compound (E)>

### • Modified silicone compound (E1)

Polyether-modified siloxane copolymer ("TEGO Glide 410" manufactured by Degussa Japan Co., Ltd.)

### • Modified silicone compound (E2)

Polyether-modified silicone oil, painatable type ("TSF-4452" manufactured by Momentive Performance Materials Japan LLC)

### Example 1

A coating liquid was prepared by dissolving in water the polymer (A11), the alkylurea derivative (B1), the curing agent (C1) and the dispersing antifoaming agent (D1), in amounts of 60, 40, 5 and 1.5 parts by mass, respectively.

The obtained coating liquid was diluted with water so as for the total concentration of (A) to (D) to be 1.5% by mass. In the diluted coating liquid after the dilution with water, the content of (D1) was approximately 0.02 part by mass in relation to 100 parts by mass of the diluted coating liquid. The diluted coating liquid was applied to one surface (corona treated surface) of the 25-µm-thick biaxially stretched polyester film "Emblet S-25" manufactured by Unitika Ltd., with a Meyer bar so as for the thickness after drying to be 0.04 µm. Subsequently, the applied coating liquid was dried at 180°C for 20 seconds to yield an anti-static film.

### Examples 2 to 15 and Comparative Examples 1 to 9

In each of Examples 2 to 15 and Comparative Examples 1 to 9, as compared with Example 1, the composition of the coating liquid was altered as shown in Table 1. Otherwise in the same manner as in Example 1, anti-static films were obtained in Examples 2 to 15 and Comparative Examples 1 to 9.

### Example 16

A diluted coating liquid was prepared in which the coating liquid prepared in Example 1 was diluted so as for the total concentration of (A) to (D) to be 4.8% by mass.

On the other hand, polyester chips [relative viscosity: 1.38 (20°C, phenol/tetrachloroethane = 50/50, 0.5 g/dL)] were melt extruded at 280°C, and brought into close contact with and rapidly cooled on a casting drum on the basis of the T-die method combined with the electrostatic pinning method, to form a 210-µm-thick unstretched film. Successively, the unstretched film was longitudinally stretched with a longitudinal stretching roll heated to 90°C, at a magnification of 3.8.

To one surface of the longitudinally stretched film, by using a reverse gravure coater, the diluted coating liquid was applied so as for the application amount to be 4 g/m², the applied coating liquid was dried in an oven heated to 60°C, and then the film was transversely stretched at 120°C at a magnification of 4.8. Subsequently, the biaxially stretched film was heat treated at 230°C for 10 seconds, and then cooled and wound to yield an anti-static film. The dry thickness of the coat layer calculated from the application amount was 0.04 µm.

### Examples 17 and 18

In each of Examples 17 and 18, the composition of the coating liquid was altered as shown in Table 1 as compared with Example 16. Otherwise in the same manner as in Example 16, anti-static films were obtained in Examples 17 to 18.

### Example 19

In the homomixer "HM-310" manufactured by As One Corp., 40 parts by mass of the alkylurea derivative (B1) and 1.5 parts by mass of the modified silicone (E1) were placed, and stirred at 6000 rpm for 10 minutes with this homomixer. Then, to the stirred mixture, 5 parts by mass of the curing agent (C1), 60 parts by mass of the polymer (A11) and water were added, and the resulting mixture was stirred at 6000 rpm for 20 minutes by using the homomixer to prepare a coating liquid for which the solvent was water.

The obtained coating liquid was diluted with water so as for the total concentration of (A), (B), (C) and (E) to be 4.8% by mass. In the coating liquid after the dilution with water, the content of (E1) was 3.75 parts by mass in relation to 100 parts by mass of (B1). The coating liquid was applied and dried in the same manner as in Example 16 to yield an anti-static film.

### Examples 20 to 22

In each of Examples 20 to 22, the composition of the coating liquid was altered as shown in Table 1 as compared with Example 19. Otherwise in the same manner as in Example 19, anti-static films were obtained in Examples 20 to 22.

Tables 1 and 2 show the constitutions of the coating liquids used in Examples and Comparative Examples, and the values of the properties of the films obtained in Examples and Comparative Examples.

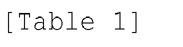

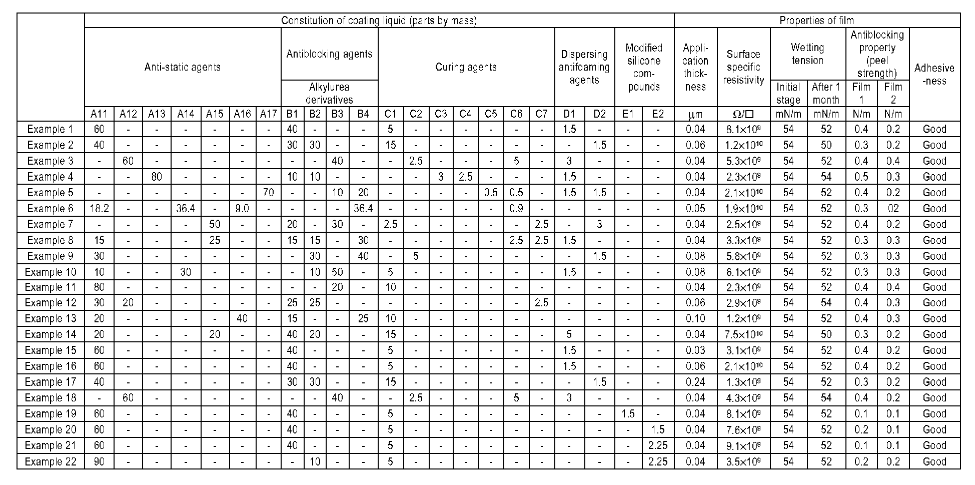

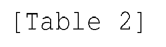

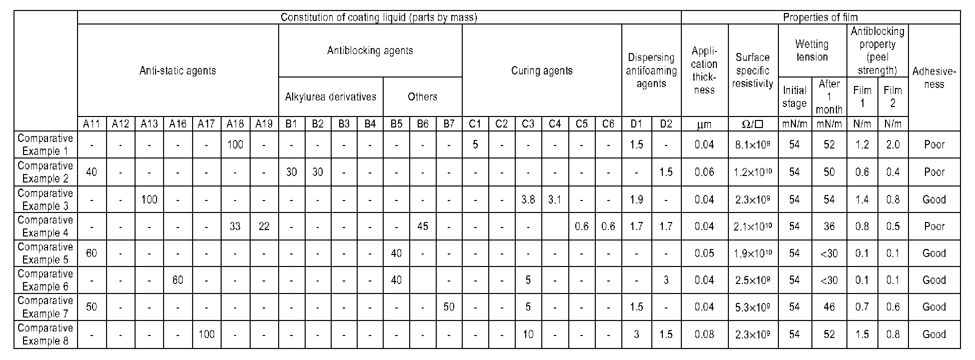

The films of Examples 1 to 22 were each low in surface specific resistivity, excellent in antiblocking property and adhesiveness, and each maintained excellent wetting tension on the opposite surface to the anti-static layer even when the film was stored in a form of a roll.

The alkylurea derivatives (B1) to (B3) used were all commercially available products, and the detailed compositions other than the fact that the fundamental structure was octadecyl ethylene urea were not clear. However, these three chemicals commercially available as octadecyl ethylene urea all allow the intended performances to be exhibited. In some Examples other than Example 2, two or more of the chemicals (B1) to (B3) commercially available as octadecyl ethylene urea were used as mixtures; however, intended performances were able to be exhibited without causing any problems. Moreover, as in Example 5 or the like, when one or more of the chemicals (B1) to (B3) commercially available as octadecyl ethylene urea were used as mixed with the chemical (B4) commercially available as an ethylene-based urea, the intended performances were able to be exhibited without causing any problems as shown in Table 1.

The polymer constituted with the monomers having a quaternary ammonium salt as an anti-static agent is soft and tends to cause blocking; however, as in Examples 1 to 21, the use of an antiblocking agent combined with the further use of a curing agent increased the cross-linking density and created difficulty in the motion of the molecular chain, and consequently was able to more improve the antiblocking property. This fact is quite obvious from a comparison of the evaluation of the antiblocking property in each of Examples 2 and 17 with the evaluation of the antiblocking property in Comparative Example 2, wherein Examples 2 and 17 and Comparative Examples are the same with respect to the compositions of the anti-static agent and the antiblocking agent, and Examples 2 and 17 each include a curing agent, but Comparative Example 2 does not include a curing agent.

The film of each of Comparative Examples 1, 3, 7 and 8 did not include the alkylurea derivative, and hence was poor in antiblocking property.

The film of Comparative Example 2 did not contain any curing agent, and hence the antiblocking property and the adhesiveness were poor.

The film of Comparative Example 4 used a modified polyethylene in place of an alkylurea derivative, and hence the wetting tension of the opposite surface to the anti-static layer was degraded with time, and the antiblocking property and the adhesiveness were poor.

The films of Comparative Examples 5 and 6 each used an acrylic silicone in place of an alkylurea derivative, and hence the wetting tension of the opposite surface to the anti-static layer was degraded with time although the antiblocking property was good.

## Claims

1. An anti-static film comprising an anti-static layer on at least one surface of a resin film, wherein the anti-static layer comprises an anti-static component-containing polymer (A), an alkylurea derivative (B) and a curing agent (C), and surface specific resistivity of the anti-static film at 23°C and 50% RH is 1.0 × 10¹¹ Ω/□ or less.

2. The anti-static film according to claim 1, wherein the anti-static component-containing polymer (A) is constituted with a quaternary ammonium base-containing polymer (A1), and a content ratio (A1/B) between the quaternary ammonium base-containing polymer (A1) and the alkylurea derivative (B) is 30/70 to 95/5 (mass ratio).

3. The anti-static film according to claim 2, wherein the quaternary ammonium base-containing polymer (A1) has one or more functional groups selected from the group consisting of a carboxyl group, a hydroxyl group and an amino group.

4. The anti-static film according to claim 1, wherein the curing agent (C) is one or more selected from the group consisting of an epoxy compound, an amino resin, an isocyanate compound, a silanol compound and a metal complex salt.

5. A method for producing an anti-static film, comprising, when the anti-static film according to any one of claims 1 to 4 is produced, forming an anti-static layer by applying and drying a coating liquid including the anti-static component-containing polymer (A) or the quaternary ammonium base-containing polymer (A1), the alkylurea derivative (B) and the curing agent (C).

6. The method for producing an anti-static film, according to claim 5, wherein the coating liquid further includes a dispersing antifoaming agent (D) and/or a modified silicone compound (E).

7. The method for producing an anti-static film, according to claim 5, wherein a solvent of the coating liquid is water.
